# DEMANDE DE BREVET EUROPEEN

(11) **EP 1 517 078 A2**
(43) Date de publication de la demande: **23.03.2005**
(21) Numéro de dépôt: 04104492.6
(22) Date de dépôt: 16.09.2004
(51) Int. Cl.: F17C 1/12, F17C 3/06, F17C 13/00

(54) **Procédé d'isolation thermique d'un double fond separant deux ergols d'un réservoir**

(30) Priorité: 18.09.2003 FR 0350566
(71) Demandeur: Cryospace l'Air Liquide Aerospatiale, 78130 Les Mureaux (FR)
(72) Inventeur: Cargnello, Rémo, F-78130 Les Mureaux (FR); Damas, Alain, F-92500 Rueil Malmaison (FR); Barbier, François, F-78150 Le Chesnay (FR)
(74) Mandataire: Poulin, Gérard

(57) **Abrégé**

Le double fond (4) d'un double réservoir d'ergol est isolé thermiquement par dépôt d'un revêtement en une matière telle que la mousse de copolymère d'éthylène d'acétate de vinyle apte à résister aux hautes pressions aussi bien qu'aux basses températures. Ce dépôt est disposé en contact avec la phase liquide de l'ergol le plus froid, comme l'hydrogène liquide.

## Description

Le sujet de cette invention est un procédé d'isolation thermique d'un double fond d'un réservoir séparant deux ergols cryogéniques.

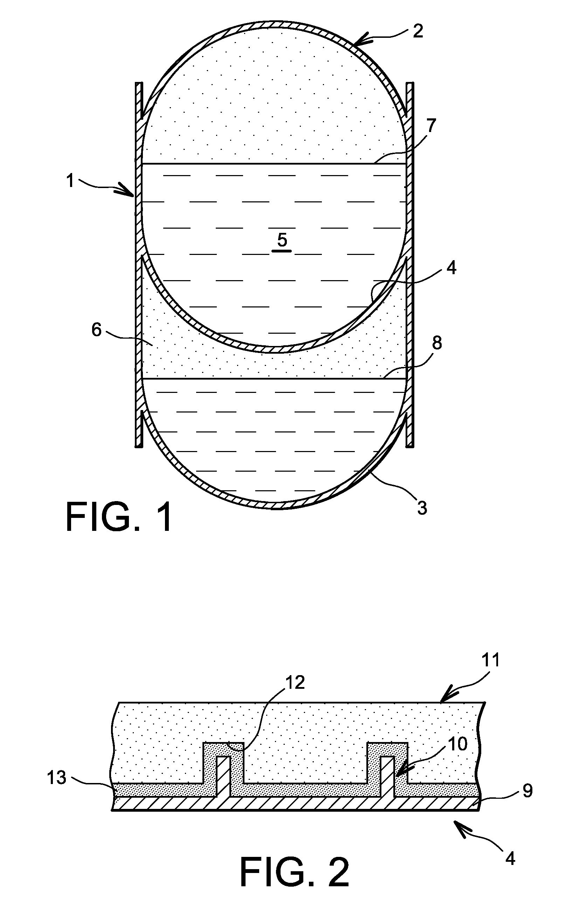

On appelle ici « ergols cryogéniques » des corps utilisés pour assurer la propulsion d'un véhicule, notamment spatial, et qui sont maintenus à des températures très basses : c'est le cas, en pratique, de l'oxygène et de l'hydrogène liquides. Les réservoirs présentent souvent deux compartiments d'ergols différents qui doivent être divisés par un double fond. Le double fond doit être mauvais conducteur de la chaleur afin d'éviter les transferts thermiques entre les deux ergols qui sont maintenus à des températures différentes, comme 20K pour l'hydrogène liquide et 90K pour l'oxygène liquide. Une conséquence d'une isolation thermique insuffisante serait la formation indésirable d'oxygène solide (sous 54K) au contact de l'oxygène liquide avec le double fond. Pour obvier à cet inconvénient, la construction traditionnelle du réservoir est celle de la figure 1 : elle comprend une paroi latérale 1, une face supérieure 2, une face 3 inférieure et le double fond 4. Les faces supérieure et inférieure 2 et 3 ainsi que le double fond 4 se joignent à la paroi latérale 1 et toutes ces faces sont bombées pour résister mieux aux pressions. Un compartiment à hydrogène 5 est délimité par la paroi latérale 1, la face supérieure 2 et le double fond 4 ; un compartiment à oxygène 6 est délimité par la paroi latérale 1, le double fond 4 et la face inférieure 3. Les ergols dans leurs compartiments 5 et 6 présentent chacun une interface 7 ou 8 entre le liquide et le gaz ; ainsi, l'oxygène liquide n'est normalement pas en contact avec le double fond 4, mais cet avantage ne peut pas être maintenu en toutes circonstances, ce qui rend l'isolation thermique du double fond 4 indispensable.

Une solution efficace consiste à construire le double fond 4 sous forme de deux parois parallèles entre lesquelles le vide est instauré, mais elle est coûteuse. Une autre solution consiste à construire les compartiments 5 et 6 complètement séparés, mais ici encore au prix d'une complication de la structure du réservoir, d'une augmentation importante de sa masse et aussi d'une baisse de performance de l'étage de propulsion.

Une autre solution consiste à revêtir le double fond 4 d'une matière isolante convenable. Comme on a renoncé à la construction à deux parois, l'isolant est en contact avec l'un ou l'autre des ergols. On peut ainsi le disposer sur la face du double fond 4 donnant dans le compartiment inférieur 6. Il est alors en contact avec l'oxygène gazeux en temps normal, mais l'oxygène liquide le baigne quand le réservoir est inversé et une réaction chimique entre l'oxygène et le revêtement peut facilement s'ensuivre et conduire à une inflammation de l'ergol et à une destruction du véhicule spatial.

Des difficultés existent aussi si le revêtement doit être installé du côté du compartiment d'hydrogène 5, à cause de la température beaucoup plus basse qui y règne. La plupart des corps n'ont pas une résistance mécanique convenable à de telles températures. Il faut rappeler aussi que les réservoirs sont soumis à une épreuve dite de timbrage avant le remplissage en ergol, par laquelle ils sont portés à des pressions élevées de 4 à 5 bars. La plupart des matériaux isolants auxquels on pourrait penser résistent mal à ces pressions, et des destructions peuvent apparaître encore plus volontiers après le refroidissement à l'hydrogène 2 : le revêtement se fissure en compromettant l'isolation, et des particules de revêtement peuvent se détacher, polluer le carburant et les filtres de l'installation.

La qualité de la propulsion sera compromise.

Le document EP 1 279 885 mentionne un revêtement isolant disposé du côté de l'hydrogène, mais dans une situation où le réservoir à hydrogène est placé au-dessous du réservoir à oxygène, contrairement à ce qui peut être imposé par les constructeurs de l'astronef porteur du réservoir double. Le revêtement est alors en contact de l'hydrogène gazeux, qui le soumet à des sollicitations beaucoup moins fortes que l'hydrogène liquide : il peut être construit en de nombreux matériaux qui ne conviendraient pas pour un contact avec l'hydrogène liquide.

Les modes de réalisation effectivement exposés dans ce document ne donnent pas satisfaction dans la situation de l'invention.
. La qualité de la propulsion sera compromise.

L'invention consiste toutefois à revêtir le côté froid d'un double fond du genre déjà défini d'une matière convenable, dont l'intégrité est maintenue après les épreuves qu'elle doit subir successivement malgré le contact permanent avec le liquide le plus froid. En premier lieu, elle doit être souple pour se déformer à un effort de compression, notamment pendant l'épreuve de timbrage effectuée à température ambiante avant de revenir à sa forme initiale sans dégradation quand la pression est relâchée. En second lieu, elle doit résister aux basses températures auxquelles les ergols sont portés, et notamment à la température de l'hydrogène liquide dans la plupart des applications envisagées. Enfin, elle ne doit pas avoir la capacité de produire des particules susceptibles de colmater un filtre.

Une matière polymérique qui répondra à ces exigences est la mousse de copolymère d'éthylène acétate de vinyle réticulée à cellules fermées, qui possède une faible densité et une bonne valeur de conductivité thermique de 0,035 à 0,040W/mk. Cette matière a la faculté de durcir à basse température et de ne pas se déformer quand elle est soumise à la pression de service, en sol et en vol. Elle est cependant bien souple à la température ambiante, et résiste à la pression de timbrage tout en se prêtant à un mode de réalisation avantageux, où elle se présente sous forme de panneaux produits séparément et qu'on assemble par façonnage au double fond. Des ajustements des panneaux à pression permettent d'obtenir une étanchéité à l'hydrogène liquide.

Un mode particulier de réalisation de l'invention sera maintenant décrit. Bien qu'il soit préféré aujourd'hui, il n'est évidemment pas limitatif.

Les figures 1 et 2 qui appuient la description représentent pour la première une structure de réservoir et pour la seconde un détail en coupe du double fond.

Les pièces du réservoir et notamment du double fond 4 sont réalisées en tôle métallique en alliage d'aluminium 2219. Le double fond 4 comprend une tôle 9 continue et une structure alvéolaire 10 composée de bandes entrecroisées délimitant des alvéoles ou cellules. La structure alvéolaire 10 est placée du côté du réservoir à hydrogène 5 qui est le réservoir supérieur et aussi de la couche isolante 11 qui est le sujet de l'invention. Cette couche présente une épaisseur comprise entre environ 30 et 40mm, la hauteur de la structure alvéolaire 10 étant d'environ 25mm. La face supérieure de la couche 11 est lisse et la face inférieure est façonnée avec des rainures 12 qui s'ajustent sur la structure alvéolaire 10. Une couche de colle 13 lie la couche isolante 11 au double fond 4.

La face du double fond 4 qui portera la couche isolante 11 est d'abord préparée afin de lui conférer une tension superficielle suffisante pour assurer l'adhérence du primaire d'accrochage. Elle peut prendre différentes formes bien connues de l'homme du métier. Ainsi elle consiste généralement en une opération de dégraissage alcalin et une opération de décapage sulfochromique pour les surfaces d'aluminium, suivie d'un rinçage à l'eau déminéralisée ou d'un émerisage à l'aide d'un papier abrasif de grade fin ou encore de sablage au corindon de faible granulométrie pour éviter de dégrader le métal.

Dans un délai aussi court que possible, généralement de moins de 8 heures afin d'éviter une nouvelle pollution de la surface, l'étape de préparation de la surface est suivie d'une opération de projection d'un primaire d'accrochage. Il s'agit avantageusement d'un époxy choisi principalement pour conserver ses propriétés jusqu'à une température cryogénique d'environ 20K. La formulation d'un kilogramme est la suivante :
PZ 820 (fournisseur SODIEMA) : 280±2g
Tolène (fournisseur PROLABO) : 292g±2g
Xylène (fournisseur PROLABO) : 143g±2g
Ether-monoethylique de l'éthylique glycol (fournisseur PROLABO) : 90g±2g
HZ820 (fournisseur SODIEMA) : 196g±2g
Colorant rouge microlite (fournisseur VANTICO) : 0,415g±0,010g
(le mélange doit être de couleur uniforme)

Lorsque certaines partie de la structure métallique du double fond 4 telles que les inserts ou autres ne doivent pas être recouvertes d'isolation thermique, on place au préalable des éléments de masquage sur les emplacements correspondants.

La surface ainsi protégée peut être isolée dans un délai maximum de 90 jours après la polymérisation du primaire afin d'éviter une pollution de la surface. Un ravivage du primaire à l'alcool dénaturé au minimum 12 heures avant l'opération de collage de la protection thermique permet de dépasser ce délai de 12 jours environ.

L'épaisseur de la couche du primaire d'accrochage est avantageusement comprise entre 10 et 50 microns et de préférence proche de 20 microns.

On colle ensuite sur la surface ainsi préparée et revêtue du primaire la couche d'isolation 11 avec un adhésif apte à supporter les températures cryogéniques sans perdre son intégrité. Cet adhésif doit entre autres être compatible avec les matériaux dont il assure le collage. Il peut appartenir à la famille des époxydes et notamment consister en « Araldite » (marque déposée) AY103/HY953F de la société VANTICO.

L'application de l'adhésif s'effectue de préférence au rouleau directement sur la face de l'isolant destinée à être collée. La masse est avantageusement comprise entre 150 et 200 g/m². La couche isolante 11 est avantageusement une mousse de copolymère d'éthylène acétate de vinyle comme l'évazote (marque déposée) de la société ZOTEFOAMS. Sa densité est faible (50kg/m²) de même que sa conductivité thermique (0,040W/m.K). La matière est très souple à température ambiante et peut être poinçonnée à chaud très facilement pour y former les rainures 12. La température de poinçonnage est de 80°C. La couche isolante 11 est produite par panneaux qui sont posés à la main de manière à recouvrir la zone à protéger en appliquant une légère pression. Les panneaux sont joints sans jeu, avec au contraire une pression de serrage latéral. La souplesse de la matière isolante est assez grande pour qu'on puisse se dispenser d'y établir des dépouilles aux bords des rainures 12, qui pourraient fournir des poches d'air qu'il conviendrai d'évacuer. On attend une polymérisation de l'adhésif au minimum de 36 heures pour manipuler le réservoir. On a constaté que l'épreuve de timbrage ne détériorait nullement la couche isolante 11, qui revenait à son état initial à la fin de l'épreuve. En service, la couche isolante 11 durcit au fur et à mesure que la température baisse au point de ne plus se déformer aux pressions internes contenues alors dans le réservoir. Enfin, elle n'est pas à apte à se dissocier en particules.

D'autres matières, notamment polymériques, pourront être utilisées en plus de celle qu'on a mentionnée pour peu qu'elles possèdent les propriétés de résistance définies plus haut.

## Revendications

1. Procédé d'isolation thermique d'un double fond de réservoir séparant deux ergols cryogéniques, l'ergol le plus froid étant placé au-dessus de l'autre des ergols, **caractérisé en ce qu'**il consiste à déposer sur une des faces du double fond, plus froide qu'une face opposée, un revêtement isolant.

2. Procédé d'isolation thermique d'un double fond selon la revendication 1, **caractérisé en ce que** la matière du revêtement est une mousse en copolymère d'éthylène-acétate de vinyle.

3. Procédé d'isolation thermique d'un double fond selon la revendication 2, **caractérisé en ce que** la mousse est collée avec un adhésif de la famille des époxydes.

4. Procédé d'isolation thermique d'un double fond selon l'une quelconque des revendications précédentes, **caractérisé en ce que** le revêtement est déposé sur une surface en relief (10) du double fond (4).

5. Procédé d'isolation thermique d'un double fond selon l'une quelconque des revendications précédentes, **caractérisé en ce que** la matière polymérique est fabriquée en panneaux façonnés d'après la forme du double fond, puis déposés sur le double fond avec une juxtaposition à pression.

6. Procédé d'isolation thermique d'un double fond selon l'une quelconque des revendications précédentes, **caractérisé en ce que** la matière polymérique est déposée sur une face supérieure du double fond, dans un compartiment à hydrogène liquide (5) du réservoir, une face inférieure du double fond, opposée à la face supérieure, donnant dans un compartiment à oxygène liquide (6) du réservoir.

7. Procédé d'isolation thermique d'un double fond selon l'une quelconque des revendications précédentes, **caractérisé en ce que** la matière polymérique a la propriété de résister sans dommage à des pressions de 4 à 5 bars en compression.
